# EUROPÄISCHE PATENTSCHRIFT

(11) **EP 2 478 188 B1**
(45) Veröffentlichungstag und Bekanntmachung des Hinweises auf die Patenterteilung: **15.07.2015**
(21) Anmeldenummer: 10754747.3
(22) Anmeldetag: 17.09.2010
(51) Int. Cl.: F01D 11/00, F01D 11/02, F16J 15/44

(54) **Dichtungssegment für eine Strömungsmaschine**
Sealing segment for a continuous-flow machine
Segment d'étanchéité une turbomachine

(30) Priorität: 17.09.2009 EP 09011886
(43) Veröffentlichungstag der Anmeldung: 25.07.2012
(73) Patentinhaber: Siemens Aktiengesellschaft, 80333 München (DE)
(72) Erfinder: JENIKEJEW, Eduard, 45470 Mülheim an der Ruhr (DE); LEO, Rainer, 44789 Bochum (DE); NEEF, Matthias, 45468 Mülheim an der Ruhr (DE); SCHETTEL, Joachim, 47228 Duisburg (DE)
(86) Internationale Anmeldenummer: PCT/EP2010/063704
(87) Internationale Veröffentlichungsnummer: WO 2011/033065

(56) Entgegenhaltungen:
- WO-A1-97/42400
- BE-A- 368 567
- DE-B1- 2 559 954
- US-A- 4 436 311
- US-A- 5 395 124

## Beschreibung

Die Erfindung betrifft ein Dichtungssegment zum Abdichten eines Spaltes zwischen einem um eine Rotationsachse rotierenden Bauteils und einem feststehenden Bauteil, wobei im Betrieb zwischen dem Dichtungssegment und dem rotierenden Bauteil ein Strömungsmedium strömbar ist, wobei das Strömungsmedium eine bezüglich der Rotationsachse axiale und tangentiale Strömungskomponente aufweist, wobei das Dichtungssegment Mittel zum Verringern der tangentialen Strömungskomponente aufweist.

In einer Dampfturbine als Ausführungsform einer Strömungsmaschine wird Wasserdampf als Strömungsmedium verwendet. Der Wasserdampf bildet einen Massenstrom und besitzt eine thermische Energie, die in der Dampfturbine schließlich in Rotationsenergie umgewandelt wird. Diese Rotationsenergie führt dazu, dass ein um eine Rotationsachse drehbar gelagerter Rotor mit beliebigen Frequenzen rotiert. Der Großteil des Massenstroms strömt entlang so genannter Leit- und Laufschaufeln, wobei ein gewisser Teil als Verlust-Massenstrom zwischen den feststehenden und den rotierenden Bauteilen strömt. Dieser zwischen dem rotierenden und dem feststehenden Bauteil strömende Massenstrom wird nicht zwischen den Leit- und Laufschaufeln arbeitsabgebend benutzt, wodurch ein Verlust des Wirkungsgrades die Folge ist. Diesen Verlust-Massenstrom gilt es zu verringern.

Ein weiteres Problem dieser Verlust-Massenströme liegt darin begründet, dass die Strömungsrichtung sowohl eine in Rotationsachse zeigende axiale Richtung als auch eine in Umfangsrichtung zeigende tangentiale Richtung aufweist. Das führt dazu, dass der Verlust-Massenstrom in Richtung der Rotationsbewegung eine Drehung mitführt, die auch als Drall bezeichnet wird. Ein zu hoher Drall zeichnet sich dadurch aus, dass die Tangentialgeschwindigkeit des Verlust-Massenstroms vergleichsweise hoch ist, wodurch eine Schwingung angefacht werden könnte, was zu einer ungünstigen Beeinflussung der rotordynamischen Stabilität führen kann.

Die US 5,395,124 A offenbart ein Dichtungssegment zum Abdichten eines Spaltes zwischen einem um eine Rotationsachse rotierenden Bauteil und einem feststehenden Bauteil.

Es ist daher wünschenswert, den Drall des Verlust-Massenstroms zu verringern. Dazu ist es bekannt, so genannte Drallbrecher zu verwenden, die als im Gehäuse eingefräste Nuten ausgebildet sind sowie Strömungsleitbleche, die die Strömungsrichtung des Verlust-Massenstroms umlenken. Des Weiteren ist es bekannt, sogenannte Flow Dam Seals zu verwenden, die auch als axial verlaufende Dichtspitzen bezeichnet werden, um die Strömungsrichtung zu verändern. Hindernisse im Strömungspfad sind ebenfalls geeignete Mittel, um die tangentiale Strömungskomponente des Verlust-Massenstromes zu verringern. Beispielsweise können Bürstendichtungen solch ein Hindernis darstellen.

Wünschenswert wäre es die tangentiale Komponente des Verlust-Massenstroms mit einfachen Mitteln zu verringern.

An dieser Stelle setzt die Erfindung an, deren Aufgabe es ist, den Drall der Verlust-Massenströmung zu verringern.

Gelöst wird diese Aufgabe durch ein Dichtungssegment gemäß Anspruch 1.

Die Erfindung hat u.a. den Vorteil, dass nunmehr die Mittel zum Verringern der tangentialen Strömungskomponente direkt in ein Dichtungssegment angeordnet werden. In der Regel werden die Strömungsmaschinen derart ausgebildet, dass der Rotor einem feststehenden Bauteil, wie z.B. in einem Gehäuse gegenüber angeordnet ist. Zur besseren Dichtwirkung wird in das Gehäuse ein Dichtungssegment angeordnet, dass in der Regel in der radialen Richtung bewegbar ist. Zusätzlich werden so genannte Dichtspitzen aus der dem rotierenden Bauteil gegenüberliegenden Unterseite des Dichtungssegmentes angeordnet, sowie auf dem rotierenden Bauteil selbst. Solche Dichtungen bzw. Dichtspitzen sind auch als Labyrinthdichtungen bekannt. Mit der Erfindung wird somit nunmehr vorgeschlagen die Mittel zum Verringern des Dralles direkt in das Dichtungssegment anzuordnen, wodurch sich Materialkosten verringern sowie die Fertigungszeit, verkürzen. Des Weiteren sind die Dichtungssegmente zerstörungsfrei austauschbar, was bei Revisionen, die häufigerweise eine veränderte Strömungsgeometrie des Massenstromes mit sich bringt, berücksichtigt werden.

Das Dichtungssegment weist eine Stirnseite auf, die von dem Verlust-Massenstrom angeströmt wird und Einfräsungen umfasst. Mit den Einfräsungen ist somit ein vergleichsweise einfaches Mittel angegeben, dass fertigungstechnisch schnell und kostengünstig umgesetzt werden kann. Vorteilhafterweise sind die Einfräsungen radial bezüglich der Rotationsachse ausgeführt. Die Strömungsrichtung des Verlust-Massenstromes ist in der Regel im Wesentlichen parallel zur Umfangsrichtung (also in Tangentialrichtung) ausgebildet. Durch radial ausgeführte Einfräsungen wird dadurch die Tangentialkomponente abgebremst und gleichzeitig keine weitere Strömungskomponente in radialer Richtung erzeugt.

Die Einfräsungen sind in äquidistanten Abständen in einer Umfangsrichtung bezüglich der Rotationsachse angeordnet. Aus symmetrischen Gründen könnte es bei einer nicht äquidistanten Einteilung der Einfräsungen zu Resonanzverstärkungen kommen, was zu schwerwiegenden Folgen führen könnte. In Umfangsrichtung in äquidistanten Abständen erfolgenden Einfräsungen führen zu einer Minimierung der Gefahr von Resonanzverstärkungen.

Das Dichtungssegment weist eine dem rotierendem Bauteil gegenüberliegende und zum Aufnehmen der Dichtspitzen ausgebildete Unterseite und eine gegenüber der Unterseite angeordnete und vom Massenstrom anströmbare Oberseite. Somit strömt ein in Richtung des Dichtungssegmentes anströmender Verlust-Massenstrom sowohl auf die Oberseite als auch auf die Unterseite des Dichtungssegments. An dieser Stelle ist der Druck p1 der sowohl an der Oberseite als auch auf der Unterseite herrscht gleich groß.

Vorteilhafte Weiterbildungen sind in den Unteransprüchen angegeben.

In einer weiteren vorteilhaften Weiterbildung ist das Dichtungssegment zum Aufnehmen von Dichtspitzen ausgebildet.

Die Dichtspitzen sind hierbei auf einer Unterseite des Dichtsegmentes eingestemmt und in Umfangsrichtung ausgebildet. Diese Dichtspitzen führen zu einer Stauung des Verlust-Massenstromes zwischen dem Dichtsegment und dem rotierenden Bauteil. In einer vorteilhaften Weiterbildung sind diese Dichtspitzen als Labyrinthdichtung zwischen der Unterseite des Dichtungssegmentes und dem rotierenden Bauteil ausgebildet.

Die Dichtspitzen sind hierzu vorteilhafter Weise entlang der Rotationsachse hintereinander angeordnet.

Die Einfräsungen sind vorteilhafter Weise bis zur ersten Dichtspitze ausgeführt. Dadurch werden die Strömungsverhältnisse optimal berücksichtigt. Ein möglichst nah an der ersten Dichtspitze ausgeführte Einfräsung, die den Drall minimiert, führt zu besseren Strömungsbedingungen.

In einer weiteren vorteilhaften Weiterbildung sind die Bohrungen derart angeordnet, dass diese die Oberseite mit der Unterseite strömungstechnisch verbindet. Das bedeutet, dass ein Verlust-Massenstrom, der entlang der Oberseite strömt, durch die Bohrung zur Unterseite strömt und zwischen dem Dichtsegment und dem rotierenden Bauteil wieder ausströmt.

Da ein Druckunterschied erforderlich ist, damit der Verlust-Massenstrom von der Oberseite zur Unterseite strömt, mündet die Bohrung zwischen einer ersten in axialer Richtung dahinter angeordneten zweiten Dichtspitze auf der Unterseite. Ein zwischen der Unterseite und dem rotierenden Bauteil strömender Verlust-Massenstrom erleidet dadurch einen Druckabbau von p1 nach p2, wobei p2 kleiner p1 gilt. Dadurch entsteht ein Antrieb, der dazu führt, dass ein Massenstrom von der Oberseite zu der Unterseite führt.

Vorteilhafterweise wird die Bohrung derart ausgeführt, dass sie unter einem Winkel von 45° bis 75° gegenüber einer Tangentialrichtung angeordnet ist. Dies führt dazu, dass die durch die Bohrung führende Strömung der Tangentialkomponente der Verlust-Massenströmung entgegenwirkt und dadurch den Drall hemmt.

In alternativen Ausführungsformen kann neben eine Einfräsung ein aufgesetzter oder angesetzter Drallbrecher oder ähnliches an der Stirnseite des Dichtungselementes gestaltet sein.

Durch die erfindungsgemäße Anordnung zur Ausbildung des Dichtungssegments ist ein geringerer fertigungstechnischer Aufwand sowie eine geringe axiale Baulänge des Drallbrechers möglich.

Im Folgenden wird ein Ausführungsbeispiel der Erfindung anhand der folgenden Figuren näher erläutert. Komponenten mit derselben Wirkungsweise werden mit selben Bezugszeichen versehen.

Es zeigen:
- FIG 1: eine perspektivische Darstellung eines Dichtungssegments;
- FIG 2: eine Schnittdarstellung durch ein Dichtungssegment ohne Bohrungen;
- FIG 3: eine perspektivische Darstellung eines Dichtungssegments mit einem Schnitt entlang der Stirnseite;
- FIG 4: eine Schnittdarstellung durch das Dichtungssegment mit Bohrungen;
- FIG 5: eine Schnittdarstellung in Richtung der Rotationsachse durch ein Teil des rotierenden Bauteils und des Dichtungssegments.

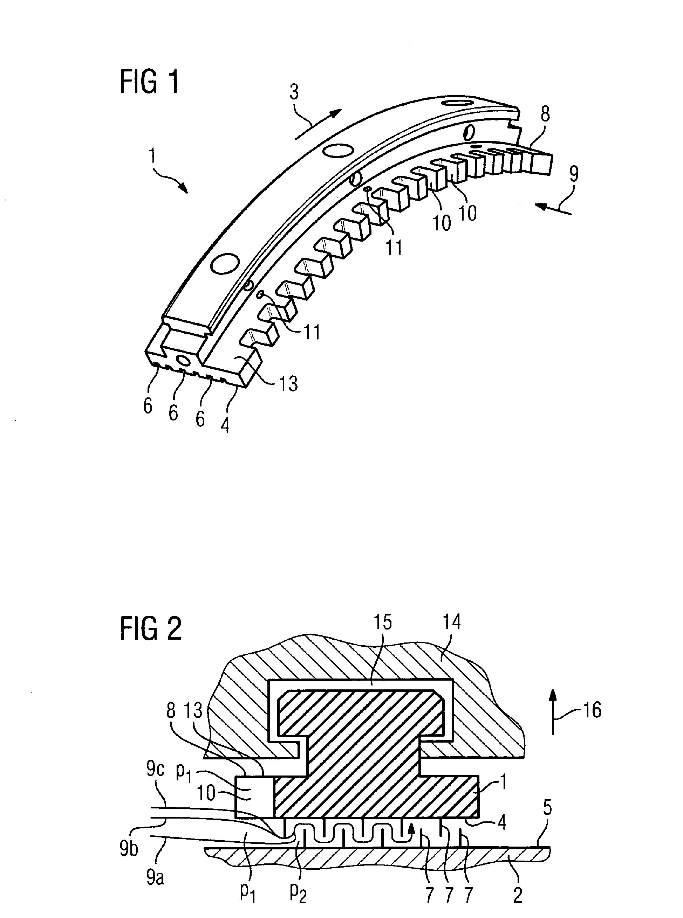

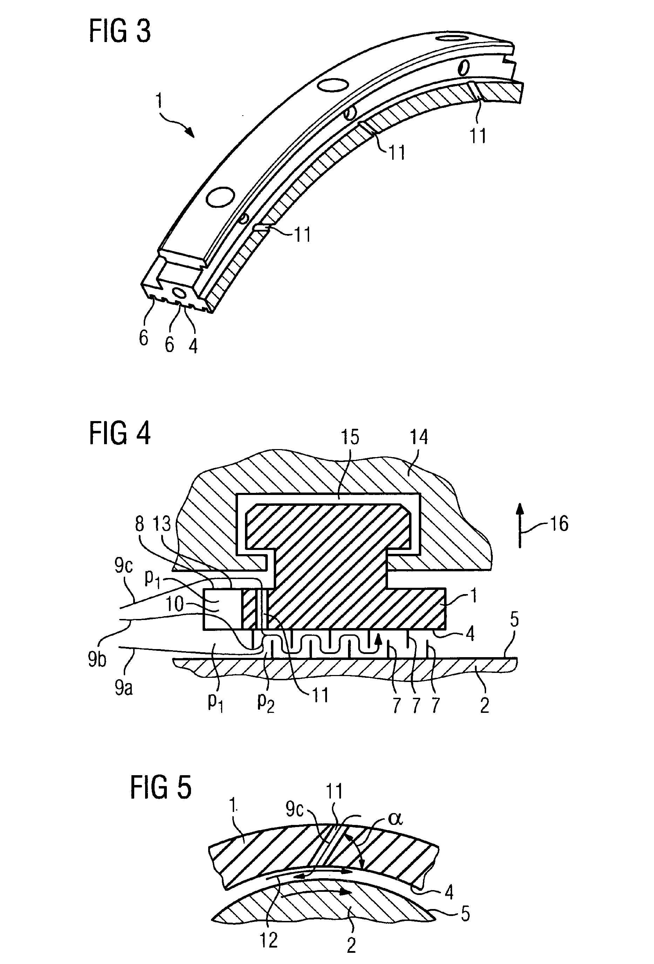

Das in der FIG 1 dargestellte Dichtungssegment 1 wird beispielsweise in einer Dampfturbine als Ausführungsform einer Strömungsmaschine eingesetzt. Solch ein Dichtungssegment 1 wird in einem Gehäuse angeordnet, das um ein rotierendes Bauteil 2, das als Rotor ausgeführt werden kann, angeordnet. Das Dichtungssegment 1 wird in einer Umfangsrichtung 3 ausgebildet. Das bedeutet, dass das Dichtungssegment 1 im Wesentlichen der Umfangsrichtung 1 folgt, also gebogen ausgeführt ist. Auf einer Unterseite 4, die im Betrieb gegenüber einer Oberseite 5 des rotierenden Bauteils 2 angeordnet ist, sind Nuten 6 angeordnet, die zum Aufnehmen von Dichtspitzen 7 ausgebildet sind. Wie in FIG 2 dargestellt entsteht dadurch eine Art Labyrinthdichtung zwischen dem Dichtungssegment 1 und dem rotierenden Bauteil 2. In FIG 1, 2, 3 und 4 sind nicht alle Nuten bzw. Dichtspitzen mit den Bezugszeichen 6 bzw. 7 versehen. Wie in FIG 1 zu sehen, weist die Dichtspitze 7 eine Stirnseite 8 auf, die im Betrieb einer ankommenden Verlust-Massenströmung 9 begegnet. Diese Verlust-Massenströmung 9 strömt in einer ersten Ausführungsform ohne Bohrungen zwischen der Unterseite 4 und der Oberseite 5 an den Dichtspitzen 7 entlang, was in der FIG 2 durch die Linien 9a, 9b, 9c dargestellt wird. Hierbei wird besonders deutlich, dass die Strömungslinie 9c durch die als Einfräsungen 10 ausgebildeten Mittel zum Verringern der tangentialen Strömungskomponente 12, abgelenkt werden. Die tangentiale Strömungskomponente 12 entspricht hierbei im Wesentlichen der Umfangsrichtung 3. In der FIG 1 und in FIG 2 und 4 ist aus Gründen der Übersichtlichkeit lediglich eine Einfräsung mit dem Bezugszeichen 10 versehen worden.

Die Mittel zur Verringerung der tangentialen Strömungskomponente 12 sind in diesem Ausführungsbeispiel als Einfräsungen 10 realisiert. In alternativen Ausführungsformen können diese Mittel als aufgesetzte Umleitbleche ausgebildet sein.

Die Einfräsungen 10 sind in äquidistanten Abständen in der Umfangsrichtung 3 bezüglich einer nicht näher dargestellten Rotationsachse angeordnet. Die FIG 3 zeigt einen Schnitt im Bereich der Stirnseite 8 des Dichtungssegments 1. Das Dichtungssegment 1 weist Bohrungen 11 auf, die durch die in FIG 3 dargestellte Perspektive deutlich zu sehen sind. Die Bohrungen 11 werden hierbei derart angeordnet, dass sie einer der tangentialen Strömungskomponente 12 des Verlust-Massenstroms 9 entgegenwirkt, was in der FIG 5 durch die Strömungsrichtung der Strömungslinie 9c dargestellt wird, die entlang einer Oberseite 13 im Bereich der Dichtspitze 8 entlang strömen und durch die Bohrung 11 in den Spalt zwischen der Unterseite 4 und der Oberseite 5 des rotierenden Bauteils 2 strömt. Vorteilhafterweise weist die Bohrung 11 hierbei einen Winkel α einen Wert zwischen 45° und 75° auf. In alternativen Ausführungsformen kann der Winkel einen Bereich zwischen 35° und 55°, 25° bis 55°, 45° bis 85°, 50° bis 75° aufweisen.

Die Strömungslinien 9a, 9b und 9c verlaufen im Wesentlichen an den Dichtspitzen 7 entlang. Im Bereich vor der Stirnseite 8 herrscht der Druck p1 sowohl zwischen der Unterseite 4 und der Oberseite 5 des rotierenden Bauteils 2 sowie zwischen der Oberseite 13 der Stirnseite 8 und einem Gehäuse 14. Die Strömungslinien 9a und 9b strömen vom Druck p1 ausgehend von der ersten Dichtspitze zur nächsten Dichtspitze, wobei ein gewisser Druck von p1 nach p2 abgebaut wird. Dies führt dazu, dass wie in der Stromlinie 9c zu sehen ist, eine Bypass-Strömung entlang der Bohrung 11 möglich ist.

Die in FIG 4 dargestellten Strömungslinien 9a, 9b und 9c zeigen mögliche Strömungswege des Verlust-Massenstroms 9 an. Die Stromlinie 9c zeigt, dass ca. 30% des Verlust-Massenstroms 9 über die Stirnseite des Dichtungssegments 1 hinweggeht und durch die Bohrung 11 in den Spalt zwischen der Unterseite 4 und der Oberseite 5 strömt und dadurch den Verlust-Massenstrom 9 unter der Dichtung weiter reduziert, wodurch der Drall verringert wird.

Etwa 40% des Verlust-Massenstroms 9 strömen gemäß der Stromlinie 9b unter dem Dichtungssegment 1 entlang der Einfräsungen 10, wodurch eine Drallreduzierung durch die axiale Führung erreicht wird. Schließlich strömen gemäß der Stromlinie 9a 30% des Verlust-Massenstroms 9 unter dem Dichtungssegment 1, wobei dieser Verlust-Massenstrom 9 von der Einfräsung 10 kaum behindert wird. Die tangentiale und radiale Anordnung der Bohrung 11 ist derart ausgelegt, dass die Druckdifferenz über der überbrückten Dichtung bzw. über der Bohrung 11 derart groß ist, dass der Gegendrall aus der Strömung überwunden werden kann und ein Rückströmen aus der Dichtungsströmung in die Bohrung 11 nicht erfolgen kann.

Das Dichtungssegment 1 wird über entsprechende Nuten 15 in das Gehäuse angeordnet. Das Dichtungssegment 1 kann hierdurch in einer radialen Richtung bewegbar ausgeführt sein.

## Patentansprüche

1. Dichtungssegment (1) zum Abdichten eine Spaltes zwischen einem um eine Rotationsachse rotierenden Bauteil (2) und einem feststehenden Bauteil (14),
wobei ein im Betrieb zwischen dem Dichtungssegment (1) und dem rotierenden Bauteil (2) strömendes Strömungsmedium eine bezüglich der Rotationsachse axiale und tangentiale Strömungskomponente (12) aufweist,
wobei das Dichtungssegment (1) Einfräsungen (10) zum Verringern der tangentialen Strömungskomponente (12) aufweist, wobei eine Stirnseite vorhanden ist, die vom Strömungsmedium anströmbar ist und Einfräsungen (10) aufweist,
wobei die Einfräsungen (10) radial bezüglich der Rotationsachse ausgeführt sind,
wobei die Einfräsungen (10) in äquidistanten Abständen in einer Umfangsrichtung (3) bezüglich der Rotationsachse angeordnet sind,
wobei das Dichtungssegment (1) eine dem rotierenden Bauteil (2) gegenüberliegende und zum Aufnehmen der Dichtspitzen (7) ausgebildete Unterseite (4) und eine gegenüber der Unterseite (4) angeordnete und vom Strömungsmedium anströmbare Oberseite (5) aufweist,
wobei die Einfräsungen (10) zwischen der Unterseite (4) und der gegenüber der Unterseite (4) angeordneten Oberseite (5) durchgehend ausgeführt sind.

2. Dichtungssegment (1) nach Anspruch 1,
wobei das Dichtungssegment (1) zum Aufnehmen von Dichtspitzen ausgebildet ist.

3. Dichtungssegment (1) nach Anspruch 2,
wobei die Dichtspitzen (7) in Umfangsrichtung (3) angeordnet sind.

4. Dichtungssegment (1) nach Anspruch 1 oder 2,
wobei die Dichtspitzen (7) entlang der Rotationsachse hintereinander angeordnet sind.

5. Dichtungssegment (1) nach einem der Ansprüche 2 bis 4, wobei die Einfräsungen (10) im Wesentlichen bis zur Dichtspitze (7) ausgeführt sind.

6. Dichtungssegment (1) nach Anspruch 1,
wobei Bohrungen (11) angeordnet sind, die die Oberseite (5) mit der Unterseite (4) strömungstechnisch verbindet.

7. Dichtungssegment (1) nach Anspruch 6,
wobei die Richtung der Bohrung (11) eine radiale und eine tangentiale Komponente aufweist.

8. Dichtungssegment (1) nach Anspruch 7,
wobei die Richtung der Bohrung (11) derart angeordnet ist, dass ein durch die Bohrung (11) strömender Massenstrom dem zwischen dem Dichtungssegment (1) und dem rotierenden Bauteil (2) entgegenwirkt.

9. Dichtungssegment (1) nach Anspruch 8,
wobei die Bohrung (11) unter einem Winkel von 75° bis 45° gegenüber einer Tangentialrichtung angeordnet ist.

10. Dichtungssegment (1) nach einem der Ansprüche 6 bis 9,
wobei die Bohrung (11) zwischen einer ersten und in radialer (16) Richtung dahinter angeordneten zweiten Dichtspitze auf der Unterseite (4) mündet.

11. Dichtungssegment (1) nach einem der Ansprüche 6 bis 10,
wobei die Bohrungen (11) in äquidistanten Abständen in Umfangsrichtung angeordnet sind.

12. Dichtungssegment (1) nach einem der Ansprüche 6 bis 11,
wobei die Bohrungen (11) eine in axialer Richtung zeigende Komponente aufweisen.

## Claims

1. Seal segment (1) for sealing a gap between a component (2) rotating about an axis of rotation and a stationary component (14),
wherein a flow medium which, in operation, flows between the seal segment (1) and the rotating component (2) has an axial and tangential flow component (12) with respect to the axis of rotation,
wherein the seal segment (1) has milled portions (10) for reducing the tangential flow component (12),
wherein there is an end face which is exposed to the flow medium and has milled portions (10),
wherein the milled portions (10) are executed radially with respect to the axis of rotation,
wherein the milled portions (10) are arranged with equal spacing in a circumferential direction (3) with respect to the axis of rotation,
wherein the seal segment (1) has a lower side (4) which is arranged opposite the rotating component (2) and is formed so as to receive the sealing tips (7), and an upper side (5) which is arranged opposite the lower side (4) and is exposed to the flow medium,
wherein the milled portions (10) are created continuously between the lower side (4) and the upper side (5) arranged opposite the lower side (4).

2. Seal segment (1) according to Claim 1,
wherein the seal segment (1) is formed so as to receive sealing tips.

3. Seal segment (1) according to Claim 2,
wherein the sealing tips (7) are arranged in the circumferential direction (3).

4. Seal segment (1) according to Claim 1 or 2,
wherein the sealing tips (7) are arranged one after another along the axis of rotation.

5. Seal segment (1) according to one of Claims 2 to 4,
wherein the milled portions (10) are created essentially as far as the sealing tip (7).

6. Seal segment (1) according to Claim 1,
wherein bores (11) are arranged which fluidically connect the upper side (5) to the lower side (4).

7. Seal segment (1) according to Claim 6,
wherein the orientation of the bore (11) has a radial and a tangential component.

8. Seal segment (1) according to Claim 7,
wherein the orientation of the bore (11) is arranged such that a mass flow rate flowing through the bore (11) counteracts that between the seal segment (1) and the rotating component (2).

9. Seal segment (1) according to Claim 8,
wherein the bore (11) is arranged at an angle of 75° to 45° with respect to a tangential direction.

10. Seal segment (1) according to one of Claims 6 to 9,
wherein the bore (11) opens on the lower side (4), between a first sealing tip and a second sealing tip arranged behind the first in the radial direction (16).

11. Seal segment (1) according to one of Claims 6 to 10,
wherein the bores (11) are arranged with equal spacing in the circumferential direction.

12. Seal segment (1) according to one of Claims 6 to 11,
wherein the bores (11) have a component oriented in the axial direction.

## Revendications

1. Segment (1) d'étanchéité pour rendre étanche un interstice entre un élément (2) tournant autour d'un axe de rotation et un élément (14) fixe,
dans lequel un fluide en écoulement, s'écoulant en fonctionnement entre le segment (1) d'étanchéité et l'élément (2) tournant, a une composante (12) d'écoulement axiale et tangentielle par rapport à l'axe de rotation, l'élément (1) d'étanchéité ayant des fraisures (10) pour diminuer la composante (12) d'écoulement tangentielle,
dans lequel il y a un côté frontal, sur lequel peut passer le fluide en écoulement et qui a des fraisures (10),
les fraisures (10) étant réalisées radialement par rapport à l'axe de rotation,
les fraisures (10) étant équidistantes dans la direction (3) périphérique par rapport à l'axe de rotation,
l'élément (1) d'étanchéité ayant un côté (4) inférieur opposé à l'élément (2) tournant et constitué pour recevoir les pointes (7) d'étanchéité et un côté (5) supérieur disposé en face du côté (4) inférieur et sur lequel le fluide en écoulement peut s'écouler,
les fraisures (10) étant réalisées de manière continue entre le côté (4) inférieur et le côté (5) supérieur, disposé en face du côté (4) inférieur.

2. Segment (1) d'étanchéité suivant la revendication 1,
dans lequel le segment (1) d'étanchéité est constitué pour recevoir des pointes d'étanchéité.

3. Segment (1) d'étanchéité suivant la revendication 2,
dans lequel les pointes (7) d'étanchéité sont disposées dans la direction (3) périphérique.

4. Segment (1) d'étanchéité suivant la revendication 1 ou 2,
dans lequel les pointes (7) d'étanchéité sont disposées les unes derrière les autres, le long de l'axe de rotation.

5. Segment (1) d'étanchéité suivant l'une des revendications 2 à 4,
dans lequel les fraisures (10) sont réalisées sensiblement jusqu'à la pointe (7) d'étanchéité.

6. Segment (1) d'étanchéité suivant la revendication 1,
dans lequel il est prévu des trous (11), qui mettent en communication du point de vue de la technique de l'écoulement le côté (5) supérieur avec le côté (4) inférieur.

7. Segment (1) d'étanchéité suivant la revendication 6,
dans lequel la direction du trou (11) a une composante radiale et une composante tangentielle.

8. Segment (1) d'étanchéité suivant la revendication 7,
dans lequel la direction du trou (11) est disposée de manière à ce qu'un courant massique passant dans le trou (11) s'oppose à celui entre le segment (1) d'étanchéité et l'élément (2) tournant.

9. Segment (1) d'étanchéité suivant la revendication 8,
dans lequel le trou (11) fait un angle de 75° à 45° par rapport à la direction tangentielle.

10. Segment (1) d'étanchéité suivant l'une des revendications 6 à 9,
dans lequel le trou (11) débouche sur le côté (4) inférieur entre une première et une deuxième pointes d'étanchéité, disposée derrière dans la direction radiale (16).

11. Segment (1) d'étanchéité suivant l'une des revendications 6 à 10,
dans lequel les trous (11) sont équidistants dans la direction périphérique.

12. Segment (1) d'étanchéité suivant l'une des revendications 6 à 11,
dans lequel les trous (11) ont une composante allant dans la direction axiale.
